# EUROPEAN PATENT SPECIFICATION

(11) **EP 2 906 834 B1**
(45) Date of publication and mention of the grant of the patent: **18.12.2019**
(21) Application number: 13845760.1
(22) Date of filing: 09.10.2013
(51) Int. Cl.: F15B 15/08, F16H 25/20, F15B 15/20, F15B 15/26, F16H 25/22, B64C 13/28, B64C 13/40

(54) **ACTUATOR**
STELLGLIED
ACTIONNEUR

(30) Priority: 12.10.2012 SE 1200623
(43) Date of publication of application: 19.08.2015
(73) Proprietor: Novoscen AB, 41263 Göteborg (SE)
(72) Inventor: CARLSSON, Ingemar, 412 63 Göteborg (SE)
(74) Representative: Bergquist, Kjell Gunnar
(86) International application number: PCT/SE2013/000154
(87) International publication number: WO 2014/058370

(56) References cited:
- EP-A1- 0 662 573
- EP-A2- 0 252 423
- JP-A- 2009 115 523
- US-A- 5 370 011
- US-A- 5 370 011
- US-A1- 2002 129 699
- US-A1- 2009 013 862
- US-A1- 2009 013 862
- US-B1- 6 272 947
- US-B2- 6 928 894

## Description

### TECHNICAL FIELD

The present invention relates to an actuator that can be used in particular within the theatrical, musical, and event management business, or within sporting events.

### BACKGROUND OF THE INVENTION

It is common that powerful, so-called actuators are used when lifting and/or positioning heavy loads. Smaller actuators can be used as actuators to control rudder surfaces in airplanes or vessels, or in control devices on land based vehicles. Actuators may be powered in different ways, such as by hydraulic, pneumatic, electric or mechanical drives.

Systems with several interacting and synchronized actuators are often used in applications where heavy loads are handled. In such a system one or several actuators may work with so-called load compensation, which may be accomplished e.g., by a counterweight or a mechanical spring reliving the actuator or the actuators of at least part of the handled load.

The patent document US 6 928 894 B2 describes an actuator that combines a means of transfer of the hydraulic force through a means of transferring mechanical force. The described actuator has a cylindrical body and a piston that is built to glide relative to the cylinder body. In addition, the actuator has a means of transferring mechanical power to said piston, which includes a motor-driven system with a self-locking nut and screw, which is built to control the piston's position, in addition to a means to transfer hydraulic power to the piston using a liquid under pressure, wherein the means for transferring mechanical and hydraulic power respectively, are arranged to act on the piston in parallel. According to US 6 928 894 B2, the hydraulic power is conveyed by a hydraulic energy reservoir arranged to recover hydraulic power, while the system with the self-locking nut and screw works as a safety measure to lock the position of the piston, as well as a synchronization mechanism when the system includes several actuators. According to US 6 928 894 B2, the described actuator is constructed to minimize the necessary effect needed to control the same and to obtain a simple means for accurate control of the velocity and position of the load being controlled by the same.

In connection with theatre and opera performances, musical shows, sporting events as well as with several other events, there is a particular need for powerful and efficient actuators in order to move and/or position stages, grandstands, scenery and other heavy units in an audience-friendly, safe and pre-determined manner.

Regarding for example theatre stages, these have a very high weight (5-200 tons) and they need to be dynamically lifted and/or positioned with millimeter accuracy, with velocity ranging from some millimeters per minute to several meters per second. In addition, there is also a high demand for safety, a stage should for example remain static in position, or be brought to a standstill, in case of a sudden interruption in power. Theatres are often located in old city centers, and in culturally important buildings. Generally, this means that space and access to electrical power are restricted. The structural strength and rigidity of the building may also place restrictions upon the kind of actuators that can be used. Regarding theatres, it is required that actuators and other machinery operate essentially soundlessly. Poor access to installation space and the requirement for silent operation of the theatre equipment, in many cases make it impossible to provide sufficient cooling of the actuators in a satisfactory manner, since by today's technology these have relatively low efficiency and therefore demand large noisy fans and bulky pipes for cooling air.

The presently available actuators thus have a large demand for power, cooling and space, and they cannot work silently in certain applications. Furthermore, in many cases they have a relatively poor precision and dynamic. In addition, many of the existing actuators are perceived to provide insufficient safety in case of a cut in electrical power and/or loss of hydraulic pressure. In other words, there is a need for an improved, specially developed actuator to be used in connection with theatre and opera performances, sporting events, fairs and other events.

An actuator of this type is already known from the document JP 2009115523.

### SUMMARY OF THE INVENTION

A first object of the invention is to provide a very powerful actuator which works with very low friction, high efficiency, low power demand and low cooling requirement, which enables a compact installation of the actuator and silent operation of the same, wherein the actuator also offers high level of safety in case of a loss of electric power or hydraulic pressure when lifting or moving a load.

This first object is achieved by means of an actuator for lifting according to claim 1, wherein the actuator comprises a hydraulic cylinder with a cylinder body and a piston which is slidably arranged in the cylindrical body, wherein the said actuator also comprises a pressure accumulator arranged to deliver a controllable hydraulic pressure to said hydraulic cylinder to affect the piston inside said cylinder body, wherein said actuator in addition comprises a screw mechanism with a nut and a screw arranged to interact with said piston and thereby control the position of the piston in the said cylinder body, wherein the screw mechanism also has a non-self-locking construction which comprises a roller screw or a ball screw, wherein the actuator comprises an electric or hydraulic motor arranged both to drive the screw and the piston interacting with the screw during the lifting of the said weight, and to position the screw and the piston interacting with the screw in case of loss of said hydraulic pressure from the pressure accumulator during the lifting of said load.

The non-self-locking mechanism with a roller or a ball screw that contributes to controlling the piston's displacement inside the hydraulic cylinder gives the actuator 1, according to the invention, substantially less friction and power requirement and thereby generates less heat than what would be the case with a self-locking screw mechanism. The lower need for power enables the use of smaller drives for the actuator according to the invention, which reduces the required installation space. The reduced generation of heat decreases the need to cool the actuator when it is working and thereby enables a more silent operation, since the need for noisy fans is reduced. The decreased need of cooling reduces the required installation space, since the cooling fans and the pipes may be chosen to be of smaller dimension. The reduced installation space and the more silent operation make the actuator according to the invention especially well suited for installation and use in narrow spaces in buildings with poor sound insulation, for example in older theatres.

A second object of the invention is to provide an actuator with a high degree of controllability and movement dynamics in connection with the lifting of a load.

This second object is achieved with an actuator according to claim 1, where the screw mechanism comprises a screw free of backlash.

The low friction in the non-self-locking mechanism with a roller or a ball screw in the actuator according to the invention enables very fast adjustments of the piston's displacement in the cylinder body, and the fact that the screw is of a so-called free of backlash type enables the use of a high controller gain which gives high controllability and movement dynamics.

Other objects, advantages and features in the present invention will become apparent from the following description.

### BRIEF DESCRIPTION OF THE FIGURES

In the following a number of embodiments of the invention will be described in some detail, merely as examples and with reference to the enclosed schematic drawings, where:
Figure 1 shows a schematic perspective of an actuator according to a preferred embodiment.
Figure 2 shows a schematic front view of the actuator according to the preferred embodiment, arranged horizontally and with the pressure accumulator removed.
Figure 3 shows a schematic side view of the actuator according to the preferred embodiment of the invention, arranged horizontally and with the pressure accumulator removed.
Figure 4 shows a schematic sectional view of the actuator according to the preferred embodiment, along the line A-A in fig. 2.
Figure 5 shows a schematic sectional view of the actuator according to the preferred embodiment, along the line B-B in fig. 3, and

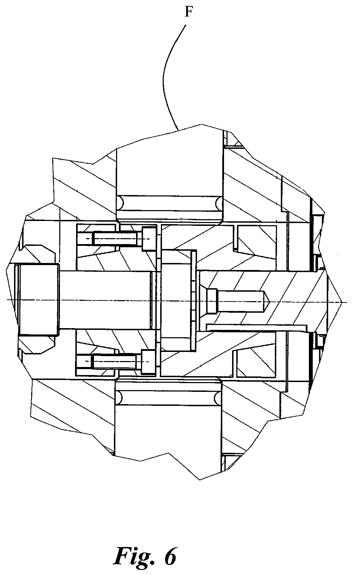

figure 6 shows a detailed view F, cut from fig. 4, and illustrates how the screw mechanism is coupled to its driving motor.

### DESCRIPTION OF EMBODIMENTS OF THE INVENTION

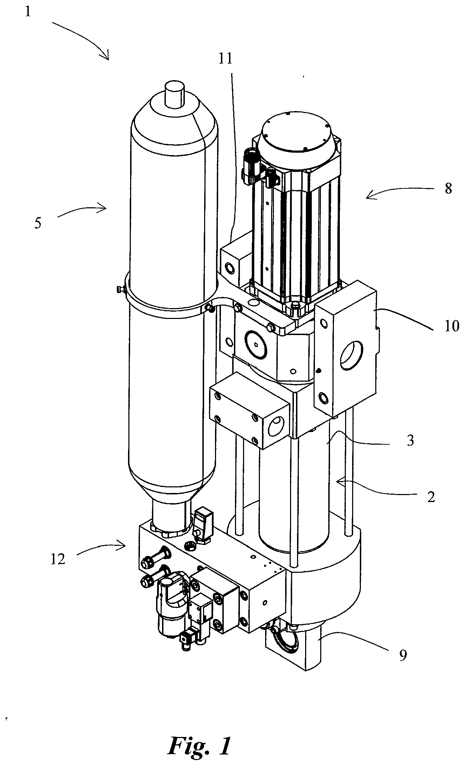

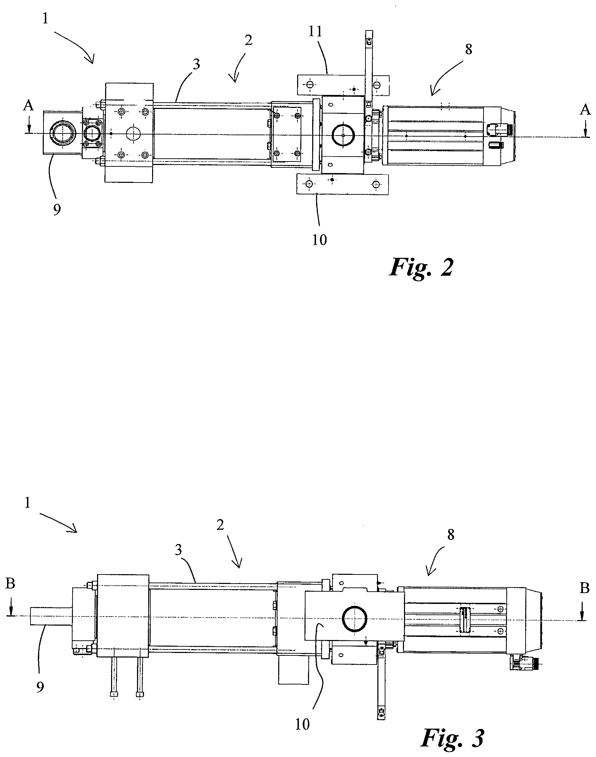

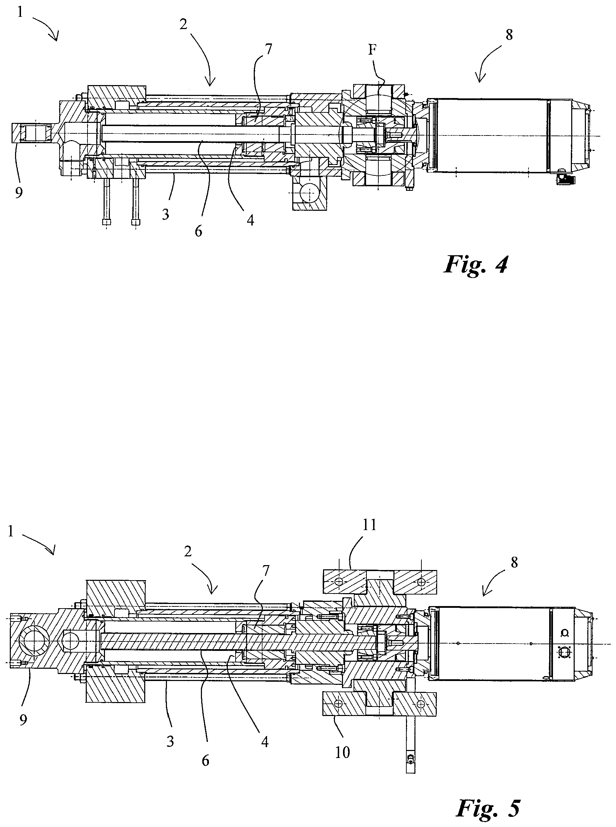

The figures 1-5 schematically illustrate an actuator 1 for lifting loads according to a preferred embodiment of the invention. The following description will be referring to the different views of the actuator shown in figures 1-5.

The actuator 1 comprises a hydraulic cylinder 2 with a cylinder body 3 and a piston 4, which is slidably arranged in the cylinder body. The actuator also comprises a pressure accumulator 5, which is arranged to deliver a controllable hydraulic pressure to the hydraulic cylinder 2 in order to influence the piston 4 in the cylinder body 3. The pressure in the pressure accumulator can mount to a level that balances the load being lifted, which relives the system for hydraulic power, and offers a higher safety.

The actuator also comprises a screw mechanism with a screw 6 and a screw-nut 7, arranged to interact with the piston 4 and thereby control the position of the piston inside the cylinder body 3. The screw mechanism 6, 7 in the actuator according to the invention has a static non-self-locking construction comprising a roller or ball screw.

The non-self-locking screw mechanism with a roller or a ball screw gives the actuator according to the invention considerably lower friction and power requirement and thereby less heat generation than what is the case with a self-locking screw mechanism. The lower power requirement enables the dimensions of the driving units for the actuator according to the invention to be made smaller, which reduces the space required for installation. The reduced heat generation decreases the need to cool the actuator when working and thereby enables a more silent mode of operation, since the need of large and noisy fans is reduced. Also the decreased need for cooling reduces the required installation space, since the cooling fans and the pipes for cooling air may be given smaller dimensions. The reduced installation space and the more silent mode of operation makes the actuator according to the invention especially suitable for installation and use in narrow spaces in buildings with poor sound insulation, for example in older theatres.

According to the invention the actuator also comprises an electric motor 8 or an hydraulic motor arranged both to drive the screw 6 and the interacting piston 4 during the lifting of the load and the positioning of the screw 6 and the interacting piston 4 in the case of loss of hydraulic pressure from the pressure accumulator 5 during ongoing lifting of the load.

The electric motor 8 or the hydraulic motor are thus used to drive the screw 6 and the piston 4 interacting with the screw 6 during lifting of the load, this enables positioning the load with very high precision by which the motor 8 drives the screw 6 and the interacting piston 4, which in turn via one or several coupling elements 9 influence the load (not shown in the figures) which is to be lifted and/or positioned. The coupling element consists of a piston rod, which by its free movable end is fashioned with suitable coupling means for linkage to the load, e.g., a lifting-/pulling eye 9, as shown in fig. 1. According to the invention, in the actuator 1 shown in the figures, the hydraulic pressure in the pressure accumulator 5 is used to, via the piston 4 and the pulling eye 9, carry leastwise most of the weight being lifted and/or positioned, while the mechanical power from the screw mechanism 6, 7 is used for fine control of the positioning of the pulling eye 9 relative to the cylinder body 3. The low friction of the non-self-locking screw mechanism 6, 7 enables a faster and more energy efficient control of the displacement mode of the pulling eye relative to the stationary mounted actuator 1, in comparison with what would be the case using an actuator with a self-locking mechanism. In order to obtain increased safety in use of the actuator 1, the pressure in the pressure accumulator 5 is set so that the hydraulic power working on the pulling eye via the piston 4 carry the entire load being lifted, while the mechanical power from the drive motor 8 is only used to control the displacement mode of the pulling eye 9 relative to the hydraulic cylinder 2. Such a mode of operation gives a built-in safety in case of a loss of electric or hydraulic power in the drive of the driving motor 8, since the existing pressure in the pressure accumulator 5 working on the piston 4 will maintain the pulling eye 9, and thereby the load, in the position they have when the loss of power occurs. As the electric motor 8 or the hydraulic motor also are disposed for positional fixation of the screw 6 and the piston 4 interacting with the screw, in case of a loss of the hydraulic pressure from the pressure accumulator 5, even better safety is achieved, since the drive motor 8 may have an individual, separate from the pressure accumulator, drive system, and thereby may continue to drive the screw 6 and maintain the piston 4 interacting with the screw, and through this the pulling eye, in the position held at the moment of loss of the hydraulic power from the pressure accumulator 5.

The screw mechanism in the actuator according to the invention comprises a so-called screw free of backlash 6, since a limited backlash in the screw enables the application of a high control gain in the actuator's control system, which give high controllability and movement dynamics when lifting and/or positioning a load. One can even envisage embodiments of the invention where the screw mechanism comprises a so-called biased screw.

In the actuator according to the invention, the non-self-locking screw mechanism preferably comprises a roller screw 6, since this type of screw has very low friction. The non-self-locking screw mechanism especially advantageously comprises a planetary roller screw, which gives even less friction.

The hydraulic cylinder 2 in the actuator according to the invention is preferably dimensioned for gravitational unloading of the load before, during or/and after the lifting. This makes it possible to use the driving motor 8 for a very rapid fine control of the displacement mode of the piston 4 in the hydraulic cylinder 2, in order to give a rapid and accurate lifting and/or positioning of the load that is coupled to actuator's lifting/pulling eye 9. The piston 4 of the hydraulic cylinder may be of unidirectional type.

In one preferable embodiment the actuator comprises a constant pressure pump (not shown in the figures) for the supply of pressurized fluid to the pressure accumulator and thereby contribute to the controllable hydraulic pressure.

In an especially preferable embodiment the actuator 1 according to the invention comprises a spring-brake (not shown in the figures) that is arranged to act on the screw mechanism 6, 7 for positional fixation of the same in case of a concurrent loss of hydraulic pressure in the pressure accumulator 5 and of the power supply of the electric motor 8 or the hydraulic power supply of the hydraulic motor. The embodiment gives even better safety in case of a total loss of both electric and hydraulic power, since the spring-brake is applied automatically and locks the load being lifted in the position it holds when the breakdown occurs. The spring-brake can be of any type that is suitable for the purpose and dimensioned for those loads that need to be slowed down.

In an especially advantageous embodiment the actuator 1 is constructed and shaped so that it can be positioned horizontally, wherein the actuator 1 comprises at least one coupling element 9 which communicates with the piston 4 inside the cylinder body 3, wherein the coupling member 9 is shaped to be connected to a load which is to be lifted via a system of chains, wires, ropes, pulleys and/or blocks. In this embodiment, the actuator is especially well suited for use in premises with limited installation space, for example in theatres in older buildings.

The actuator 1 according to the invention is preferably dimensioned for lifting loads with a weight in the interval 5-200 tons, wherein the actuator 1 is equipped with coupling elements 9, 10, 11 that are dimensioned for lifting loads of such a weight. Such a dimensioning ensures that the actuator 1 can be use in the majority of applications that may be relevant in the theatre, music or event business or in sporting events.

The actuator 1 according to the invention is preferably equipped with coupling elements 9, 10, 11 that are designed to provide an interconnection between a supporting structure and the actuator, as well as between the actuator and a theatrical stage, a theatrical lift, an orchestra podium, an audience stand or another unit for use in the theatre, music or event business or in sporting events.

In an alternative embodiment the actuator 1 comprises coupling elements that are designed to proved an interconnection between a supporting structure and the actuator, as well as between the actuator and an opening bridge flap in an opening bridge between the actuator and a stabilizing platform aboard a vessel.

In the foregoing, a number of embodiments of the invention have been described with reference to the enclosed drawings. It must be understood that the described embodiments and the details in the figures should only be seen as examples, and that many other embodiments of the invention are possible within the scope of the following claims.

In addition to what emerges from the description, the actuator according to the invention naturally comprises other necessary components, such as fixing means to mount the actuator in its place in the installation, electric connectors, hydraulic connectors, control systems etc. A skilled person can easily obtain such necessary components from any major supplier of hydraulic systems. Regarding the hydraulic system of the actuator according to the invention, this as, as shown in figure 1, an integrated hydraulic tank 12 for automatic refill of hydraulic fluid for the pressure accumulator when this becomes necessary.

## Claims

1. An actuator (1) for the lifting of a load, wherein the actuator comprises a hydraulic cylinder (2) with a cylinder body (3) and a piston (4) that is slidably arranged inside the cylinder body, wherein said actuator furthermore comprises a pressure supply (5) that is arranged to deliver a controllable hydraulic pressure to said hydraulic cylinder (2) to influence the piston (4) inside said cylinder body (3), and wherein said actuator furthermore comprises a screw mechanism with a screw (6) and nut (7) arranged to interact with said piston (4) and thereby control the piston's position inside the said cylinder body (3), wherein the screw mechanism (6, 7) has a static non-self-locking construction, wherein the actuator (1) comprises an electric motor (8) or hydraulic motor arranged both for driving the screw (6) and the piston (4) interacting with the screw in case of a loss of said hydraulic pressure from the pressure supply (5) during lifting of said load, and wherein the screw mechanism comprises a screw (6) free of backlash,
**characterized in that** the pressure supply (5) is a pressure accumulator (5) and the piston (4) is configured to influence the load which is to be lifted via one or several coupling elements with suitable coupling means (9) for linkage to the load, wherein the hydraulic pressure in the pressure accumulator (5) is used to, via the piston (4) and the coupling means (9), carry at least most of the weight being lifted, while the mechanical power from the screw mechanism (6, 7) is used for fine control of the positioning of the coupling means (9) relative to the cylinder body (3), and
wherein the pressure in the pressure accumulator (5) also is set so that the hydraulic power working on the coupling means via the piston (4) carries the entire load being lifted, while the mechanical power from the drive motor (8) is used only to control the displacement of the coupling means (9) relative to the hydraulic cylinder (2), so that the existing pressure in the pressure accumulator (5) working on the piston (4) will maintain the coupling means (9), and thereby the load, in the position they have in case of a loss of electric or hydraulic power in the drive of the driving motor (8).

2. An actuator (1) according to claim 1, **characterized in that** the screw mechanism comprises a preloaded roller screw (6).

3. An actuator (1) according to claim 1, **characterized in that** the screw mechanism comprises a planetary roller screw.

4. An actuator (1) according to any of the preceding claims, **characterized in that** the hydraulic cylinder (2) is dimensioned for gravitational unloading of said load before during and/or after said lifting.

5. An actuator (1) according to any of the preceding claims, **characterized in that** the piston (4) of the hydraulic cylinder is of unidirectional type.

6. An actuator (1) according to any of the preceding claims, **characterized in that** the actuator (1) comprises a constant pressure pump arranged to deliver hydraulic fluid to said pressure accumulator (5) and thereby contribute to said controllable hydraulic pressure.

7. An actuator (1) according to any of the preceding claims, **characterized in that** the actuator (1) comprises a spring actuated brake that is arranged to act on said screw mechanism (6, 7) for positional fixation of same in case of a concurrent loss of said hydraulic pressure in the pressure accumulator (5) and of electric power in said electric motor (8) or of electric power to the hydraulic motor or hydraulic power.

8. An actuator (1) according to any of the preceding claims,
**characterized in that** the actuator (1) is constructed and designed such that it can be placed horizontally, and that the actuator (1) comprises at least one coupling element (9) connecting said piston (4) inside the cylinder body (3), wherein said coupling element (9) is designed to be connected with a load to be lifted via a system of chains, wires, ropes, pulleys and/or blocks.

9. An actuator (1) according to any of the preceding claims, **characterized in that** the actuator (1) is dimensioned for lifting of loads with a weight in the interval 5-200 tons, and that the actuator (1) comprises coupling elements (9, 10, 11) that are dimensioned for the lifting of loads of such a weight.

10. An actuator (1) according to any of the preceding claims, **characterized in that** the actuator (1) is equipped with coupling elements (9, 10, 11) that are constructed to provide an interconnection between a carrying structure and the actuator, as well as between the actuator and a theatrical stage, a theatre lift, an orchestra podium, an audience stand or another unit for use in the theatre, music or event business or in sporting events.

11. An actuator (1) according to any of the preceding claims, **characterized in that** the actuator (1) is equipped with coupling elements that are constructed to provide an interconnection between a carrying structure and the actuator, as well as between the actuator and an opening bridge flap or between the actuator and a stabilized platform aboard a vessel.

## Patentansprüche

1. Stellglied (1) zum Heben einer Last, wobei das Stellglied einen Hydraulikzylinder (2) mit einem Zylinderkörper (3) und einem Kolben (4) umfasst, der verschiebbar innerhalb des Zylinderkörpers angeordnet ist, und wobei das Stellglied ferner eine Druckversorgung (5) umfasst, die so angeordnet ist, dass sie einen kontrollierbaren hydraulischen Druck auf den Hydraulikzylinder (2) ausübt, um den Kolben (4) innerhalb des Zylinderkörpers (3) zu beeinflussen, und wobei das Stellglied ferner einen Schraubmechanismus mit einer Schraube (6) und einer Mutter (7) umfasst, der so angeordnet ist, dass er mit dem Kolben (4) interagiert, und dadurch die Position des Kolbens innerhalb des Zylinderkörpers (3) steuert, wobei der Schraubmechanismus (6, 7) eine statische, nicht selbsthemmende Konstruktion aufweist, und wobei das Stellglied (1) einen Elektromotor (8) oder einen Hydraulikmotor umfasst, der so angeordnet ist, dass er sowohl die Schraube (6) als auch den Kolben (4) antreibt, der mit der Schraube interagiert, für den Fall, dass es zu einem Verlust des hydraulischen Drucks aus der Druckversorgung (5) während des Hebens der Ladung kommt, und wobei der Schraubmechanismus eine spielfreie Schraube (6) umfasst, **dadurch gekennzeichnet, dass** die Druckversorgung (5) ein Druckspeicher (5) ist, und der Kolben (4) dazu konfiguriert ist, die Last zu beeinflussen, die durch ein oder mehrere Kuppelelemente mit geeigneten Kupplungen (9) zur Verbindung mit der Last gehoben wird, wobei der hydraulische Druck in dem Druckspeicher (5) dazu verwendet wird, über den Kolben (4) und die Kupplungen (9) mindestens das meiste des gehobenen Gewichts zu tragen, während die mechanische Leistung von dem Schraubmechanismus (6, 7) für die Feineinstellung der Positionierung der Kupplungen (9) in Bezug auf den Zylinderkörper (3) verwendet wird, und
wobei der Druck in dem Druckspeicher (5) auch so eingestellt ist, dass die hydraulische Leistung, die über den Kolben (4) auf die Kupplungen wirkt, die gesamte gehobene Last trägt, während die mechanische Leistung von dem Antriebsmotor (8) nur dazu verwendet wird, die Lageveränderung der Kupplungen (9) in Bezug auf den Hydraulikzylinder (2) zu steuern, sodass der tatsächliche Druck in dem Druckspeicher (5), der auf den Kolben (4) wirkt, die Kupplungen (9), und damit die Last, in der Position hält, in der sie sich befinden, für den Fall eines Verlusts von elektrischer oder hydraulischer Leistung in dem Antrieb des Antriebsmotors (8).

2. Stellglied (1) nach Anspruch 1, **dadurch gekennzeichnet, dass** der Schraubmechanismus eine vorgespannte Wälzschraube (6) umfasst.

3. Stellglied (1) nach Anspruch 1, **dadurch gekennzeichnet, dass** der Schraubmechanismus eine Planetenrollenspindel umfasst.

4. Stellglied (1) nach einem der vorhergehenden Ansprüche, **dadurch gekennzeichnet, dass** der Hydraulikzylinder (2) für Schwerkraftentladung vor, während und/oder nach dem Heben der Last bemessen ist.

5. Stellglied (1) nach einem der vorhergehenden Ansprüche, **dadurch gekennzeichnet, dass** der Kolben (4) des Hydraulikzylinders von unidirektionaler Art ist.

6. Stellglied (1) nach einem der vorhergehenden Ansprüche, **dadurch gekennzeichnet, dass** das Stellglied (1) eine Pumpe mit konstantem Druck aufweist, die so angeordnet ist, dass sie Hydraulikflüssigkeit an den Druckspeicher (5) liefert und dadurch zu dem kontrollierbaren hydraulischen Druck beiträgt.

7. Stellglied (1) nach einem der vorhergehenden Ansprüche, **dadurch gekennzeichnet, dass** das Stellglied (1) eine Federdruckbremse umfasst, die so angeordnet ist, dass sie auf den Schraubmechanismus (6, 7) wirkt, um diesen, im Fall eines gleichzeitigen Verlusts des hydraulischen Drucks in dem Druckspeicher (5) und der elektrischen Leistung in dem Elektromotor (8), oder im Fall des Verlust von elektrischer Leistung an dem Hydraulikmotor oder von hydraulischer Leistung, positionsgenau zu fixieren.

8. Stellglied (1) nach einem der vorhergehenden Ansprüche, **dadurch gekennzeichnet, dass** das Stellglied (1) so konstruiert und gestaltet ist, dass es horizontal platziert werden kann, und dass das Stellglied (1) mindestens ein Kuppelelement (9) umfasst, dass mit dem Kolben (4) innerhalb des Zylinderkörpers (3) verbunden ist, wobei das Kuppelelement (9) so gestaltet ist, dass es über ein System von Ketten, Kabeln, Seilen, Umlenkrollen und/oder Sperren mit einer zu hebenden Last verbunden ist.

9. Stellglied (1) nach einem der vorhergehenden Ansprüche, **dadurch gekennzeichnet, dass** das Stellglied (1) so bemessen ist, dass es Lasten mit einem Gewicht im Bereich von 5 - 200 t heben kann, und dass das Stellglied (1) Kupplungselemente (9, 10, 11) umfasst, die für das Heben von Lasten solch eines Gewichts bemessen sind.

10. Stellglied (1) nach einem der vorhergehenden Ansprüche, **dadurch gekennzeichnet, dass** das Stellglied (1) mit Kupplungselementen (9, 10, 11) ausgestattet ist, die so konstruiert sind, dass sie eine Verbindung zwischen einer Tragstruktur und dem Stellglied, so wie eine Verbindung zwischen dem Stellglied und einer Theaterbühne, einem Bühnenaufzug, einem Orchesterpodium, einer Publikumstribüne, oder einer anderen Baueinheit, die im Theater-, Musik- oder Veranstaltungsgeschäft oder bei Sportveranstaltungen verwendet wird, bereitstellen.

11. Stellglied (1) nach einem der vorhergehenden Ansprüche, **dadurch gekennzeichnet, dass** das Stellglied (1) mit Kupplungselementen ausgestattet ist, die so konstruiert sind, dass sie eine Verbindung zwischen einer Tragstruktur und dem Stellglied, so wie eine Verbindung zwischen dem Stellglied und einer sich öffnenden Brückenklappe oder zwischen dem Stellglied und einer stabilisierten Plattform auf einem Schiff bereitstellen.

## Revendications

1. Actionneur (1) destiné au levage d'une charge, ledit actionneur comprenant un cylindre hydraulique (2) avec un corps de cylindre (3) et un piston (4) agencé de manière coulissante à l'intérieur du corps de cylindre, ledit actionneur comprenant en outre une alimentation en pression (5) qui est agencée pour délivrer une pression hydraulique pouvant être commandée audit cylindre hydraulique (2) afin d'influencer le piston (4) à l'intérieur dudit corps de cylindre (3), et ledit actionneur comprenant en outre un mécanisme de vis avec une vis (6) et un écrou (7) agencés pour interagir avec ledit piston (4) et commander ainsi la position du piston à l'intérieur dudit corps de cylindre (3), ledit mécanisme de vis (6, 7) possédant une construction statique non autobloquante, ledit actionneur (1) comprenant un moteur électrique (8) ou un moteur hydraulique tous deux agencés pour entraîner la vis (6) et le piston (4) interagissant avec la vis en cas de perte de ladite pression hydraulique provenant de l'alimentation en pression (5) durant le levage de ladite charge, et ledit mécanisme de vis comprenant une vis (6) sans jeu, **caractérisée en ce que** l'alimentation en pression (5) est un accumulateur de pression (5) et le piston (4) est conçu pour influencer la charge qui doit être levée par l'intermédiaire d'un ou de plusieurs éléments de couplage avec des moyens de couplage appropriés (9) pour la liaison à la charge, ladite pression hydraulique dans l'accumulateur de pression (5) étant utilisée pour supporter, par l'intermédiaire du piston (4) et des moyens de couplage (9), au moins la majeure partie du poids à lever, tandis que l'énergie mécanique provenant du mécanisme de vis (6, 7) est utilisée pour réguler avec précision le positionnement des moyens de couplage (9) par rapport au corps du cylindre (3), et
ladite pression dans l'accumulateur de pression (5) étant également réglée afin que l'énergie hydraulique agissant sur les moyens de couplage par l'intermédiaire du piston (4) porte toute la charge en train d'être levée, tandis que l'énergie mécanique provenant du moteur d'entraînement (8) est utilisée uniquement pour commander le déplacement des moyens de couplage (9) par rapport au cylindre hydraulique (2), afin que la pression existante dans l'accumulateur de pression (5) agissant sur le piston (4) maintienne les moyens de couplage (9), et ainsi la charge, dans la position dans laquelle ils sont en cas de perte d'énergie électrique ou hydraulique dans l'entraînement du moteur d'entraînement (8).

2. Actionneur (1) selon la revendication 1, **caractérisé en ce que** le mécanisme de vis comprend une vis à rouleaux préchargée (6).

3. Actionneur (1) selon la revendication 1, **caractérisé en ce que** le mécanisme de vis comprend une vis à rouleaux satellites.

4. Actionneur (1) selon l'une quelconque des revendications précédentes, **caractérisé en ce que** le cylindre hydraulique (2) est dimensionné pour le déchargement par gravité de ladite charge avant, durant et/ou après ledit levage.

5. Actionneur (1) selon l'une quelconque des revendications précédentes, **caractérisé en ce que** le piston (4) du cylindre hydraulique est du type unidirectionnel.

6. Actionneur (1) selon l'une quelconque des revendications précédentes, **caractérisé en ce que** l'actionneur (1) comprend une pompe à pression constante agencée pour délivrer un fluide hydraulique audit accumulateur de pression (5) et contribuer ainsi à ladite pression hydraulique pouvant être commandée.

7. Actionneur (1) selon l'une quelconque des revendications précédentes, **caractérisé en ce que** l'actionneur (1) comprend un frein actionné par ressort qui est agencé pour agir sur ledit mécanisme de vis (6, 7) pour une fixation en position de celui-ci en cas de perte simultanée de ladite pression hydraulique dans l'accumulateur de pression (5) et de l'énergie électrique dans ledit moteur électrique (8) ou de l'énergie électrique fournie au moteur hydraulique ou à l'énergie hydraulique.

8. Actionneur (1) selon l'une quelconque des revendications précédentes, **caractérisé en ce que** l'actionneur (1) est construit et conçu de sorte qu'il puisse être placé horizontalement, et que l'actionneur (1) comprenne au moins un élément de couplage (9) reliant ledit piston (4) à l'intérieur du corps de cylindre (3), ledit élément de couplage (9) étant conçu pour être relié à une charge à lever par l'intermédiaire d'un système de chaînes, de fils métalliques, de cordes, de poulies et/ou de blocs.

9. Actionneur (1) selon l'une quelconque des revendications précédentes, **caractérisé en ce que** l'actionneur (1) est dimensionné pour le levage de charges avec un poids compris dans l'intervalle allant de 5 à 200 tonnes, et **en ce que** l'actionneur (1) comprend des éléments de couplage (9, 10, 11) qui sont dimensionnés pour le levage de charges d'un tel poids.

10. Actionneur (1) selon l'une quelconque des revendications précédentes, **caractérisé en ce que** l'actionneur (1) est équipé d'éléments de couplage (9, 10, 11) qui sont construits pour assurer un raccordement entre une structure de support et l'actionneur, ainsi qu'entre l'actionneur et une scène de théâtre, un ascenseur de théâtre, un podium d'orchestre, une tribune de spectateur ou une autre unité destinés à être utilisés au théâtre, à des concerts ou à des exhibitions professionnels ou à des événements sportifs.

11. Actionneur (1) selon l'une quelconque des revendications précédentes, **caractérisé en ce que** l'actionneur (1) est équipé d'éléments de couplage qui sont construits pour assurer un raccordement entre une structure de support et l'actionneur, ainsi qu'entre l'actionneur et un tablier de pont mobile ou entre l'actionneur et une plate-forme stabilisée à bord d'un navire.
